## Europäisches Patentamt
## European Patent Office
## Office européen des brevets

(19)

(11) Veröffentlichungsnummer: **0 101 673**
**B1**

(12) # EUROPÄISCHE PATENTSCHRIFT

(45) Veröffentlichungstag der Patentschrift:
**13.08.86**

(51) Int. Cl.⁴: **F 16 L 59/02**

(21) Anmeldenummer: **83890134.6**

(22) Anmeldetag: **17.08.83**

(54) **Verfahren zur Herstellung eines thermisch isolierten Körpers.**

(30) Priorität: **20.08.82 AT 3165/82**

(43) Veröffentlichungstag der Anmeldung:
**29.02.84 Patentblatt 84/9**

(45) Bekanntmachung des Hinweises auf die Patenterteilung:
**13.08.86 Patentblatt 86/33**

(84) Benannte Vertragsstaaten:
**BE CH DE FR GB IT LI LU NL SE**

(56) Entgegenhaltungen:
**DE-A-2 114 046**
**DE-A-3 034 468**
**GB-A-1 096 430**
**GB-A-1 286 076**

(73) Patentinhaber: **VEREINIGTE EDELSTAHLWERKE AKTIENGESELLSCHAFT (VEW), Elisabethstrasse 12, A-1010 Wien (AT)**

(72) Erfinder: **Schreier, Kurt, Dipl.- Ing., Tannengasse 14, A-2384 Breitenfurt (AT)**
Erfinder: **Bartsch, Karl, Dipl.- Ing., Fröbelgasse 60, A-1160 Wien (AT)**
Erfinder: **Knoll, Helmut, Dipl.- Ing., Mürzgrabenstrasse 21, A-8644 Mürzhofen (AT)**
Erfinder: **Tomazic, Gerd, Dr., Hammerlinggasse 3, A-8680 Mürzzuschlag (AT)**

(74) Vertreter: **Widtmann, Georg, Dr., Vereinigte Edelstahlwerke Aktiengesellschaft (VEW) Elisabethstrasse 12, A-1010 Wien (AT)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

EP 0 101 673 B1

## Beschreibung

Die Erfindung bezieht sich auf ein Verfahren zur Herstellung eines thermisch isolierten Körpers z.B. eines Rohres mit einem, insbesondere metallischen, Innen- und, insbesondere metallischen, Außenmantel.

Die thermische Isolierung von Körpern wird hauptsächlich aus zwei Gründen durchgeführt, und zwar soll entweder der Wärmeverlust eines Mediums verhindert werden, oder es soll die thermische Beanspruchung beispielsweise des Außenmantels eines Behälters verhindert werden. Die ideale thermische Isolierung gegenüber Wärmeübertragung ist das Vakuum; hingegen ist gegenüber Wärmestrahlung eine die infraroten Strahlen reflektierende Schicht günstig.

Aus der EP-A-17 095 wird ein thermisch isolierter Körper bekannt, welcher einen Außen- und einen Innenmantel aufweist. Der zwischen diesen beiden Mänteln gebildete Innenraum steht unter Unterdruck und ist mit einem pulverförmigen porösen Material z.B. Aktivkohle oder Kieselgur gefüllt. Bei der Herstellung dieses Körpers wird nun so vorgegangen, daß der Zwischenraum mit dem pulverförmigen Isolierstoff gefüllt wird, worauf evakuiert und sodann verschlossen wird. Diese Vorgangsweise ist besonders langwierig, da sowohl das im Raum befindliche Gas, als auch das, in dem porösen Körper befindliche, Gas abgesaugt werden müssen.

Um diese Nachteile zu vermeiden, wurde bereits gemäß der DE-A-27 50 457 vorgeschlagen, anstelle des Vakuums ein Gas mit einer geringeren thermischen Leitfähigkeit vorzusehen, wobei gleichzeitig der Vorteil erreicht werden soll, daß langzeitig keine Verschlechterung der thermischen Eigenschaften eintritt.

In der DE-A-23 33 933 wird ein thermisch isoliertes Rohr beschrieben, welches unter anderem einen Innen- und Außenmantel aufweist, wobei der Zwischenraum mit expandiertem Perlit gefüllt wird. Ein Unterdruck im Zwischen raum soll dadurch erreicht werden, daß der Zwischenraum mit Kohlendioxid gefüllt wird, wobei das in diesem Körper gelagerte bzw. transportierte Medium eine Temperatur aufweisen soll, die unter der Kondensationstemperatur des Kohlendioxids liegt, sodaß dieses verflüssigt wird, wodurch auf diese Art und Weise ein Vakuum im Zwischenraum erreicht wird. Ein derartig thermisch isolierter Körper kann allerdings nur dann funktionstüchtig sein, wenn das Medium eine entsprechende Temperatur aufweist.

Die Aufgabe der vorliegenden Erfindung besteht nun darin, ein Verfahren zur Herstellung eines thermisch isolierten doppelmanteligen Körpers zu schaffen, bei welchen der Zwischenraum mit einem porösen, thermischen Isoliermaterial gefüllt ist, welches ein hohes Aufnahmevermögen für Gase aufweist, wodurch das im Zwischenraum herrschende Vakuum über lange Zeit aufgrund der adsorptiven Eigenschaften desselben lange aufrechterhalten werden kann und welches einfach, sicher und zeitsparend zu arbeiten erlaubt. Das erfindungsgemäße Verfahren zur Herstellung eines thermisch isolierten Körpers z.B. Rohres mit einem, insbesondere metallischen, Innen- und, insbesondere metallischen, Außenmantel, wobei der durch diese gebildete Zwischenraum mit einen porösen teilchenförmigen und/oder porösen pulverförmigen Isolierstoff wie z.B. Kieselgur, Aktivkohle, Perlit, Vermikulit, Molkekularsiebe u. dgl., der ein hohes Aufnahmevermögen für Gase aufweist, gefüllt, evakuiert und vakuumdicht verschlossen wird, besteht im wesentlichen darin, daß der Zwischenraum zwischen dem Innen- und Außenmantel evakuiert wird, worauf der Isolierstoff aus einen unter Unterdruck stehenden Behälter in den unter Unterdruck stehenden Zwischenraum eingebracht und dieser verschlossen wird. Erst ein derartiges Verfahren erlaubt es, die beim Füllen hinderlichen Eigenschaften des porösen Isolierstoffes, und zwar die langzeitige Abgabe von Gasmolekülen, wobei die hohe thermische Isolierung des Körpers aufgrund der hohen Adsorptionsfähigkeiten des Isolierstoffes erst bedingt wird, zu eliminieren und damit ein Verfahren zu schaffen, das es erlaubt, derartige thermisch isolierte Körper auch für den industriellen Einsatz zu fertigen. Der Zwischenraum kann, wenn in diesem kein gasabgebendes Medium angeordnet ist, leicht und schnell evakuiert werden, in welchen dann der bereits von Gasmolekülen im wesentlichen befreite Isolierstoff eingebracht wird. Der Isolierstoff kann beispielsweise als freie Schüttung oder in einer Drehtrommel evakuiert werden und sodann in einem Zwischenbehälter zur Abfüllung gelagert werden. Nachdem der derartig vorbereitete Isolierstoff in den evakuierten Zwischenraum eingebracht wird, kann dieser sodann verschlossen werden, wodurch der erwünschte Unterdruck langzeitig sichergestellt sein kann.

Wird der in Zwischenraum befindliche Isolierstoff während des Füllens, insbesondere entgegen und in Füllrichtung bewegt, so kann dadurch eine Brückenbildung und somit Leerraumbildung vermieden werden.

Um während des Füllens eventuell entstehende elektrostatische Aufladungen des an sich elektrisch nicht leitenden Isolierstoffes zu verhindern, wodurch ebenfalls Leerräume entstehen können, wird vor den Füllen der Innen- und Außenmantel elektrisch geerdet.

Die geeignetste Überwachung des erwünschten Füllgrades im Zwischenraum ergibt sich dann, wenn das Füllen erst nach Eintragen einer vorgegebenen Menge des Isolierstoffes beendet wird. Besonders günstig hat es sich erwiesen, die Mengenvorgabe jeweils über das Gewicht des einzufüllenden Stoffes durchzuführen.

Eine besonders einfache Verdichtung des Isolierstoffes im Zwischenraum kann durch Schwerkrafteinwirkung erreicht werden.

Werden der Innen- und Außenkörper an einem Ende vor dem Füllen durch eine Membran miteinander verbunden, so können Spannungen z.B. aufgrund der unterschiedlichen Temperatur von Innen- und Außenrohr und samt unterschiedlicher Längen während des Einsatzes leicht ausgeglichen werden.

Wird der Zwischenraum mit einem erwärmten bzw. erhitzten Isolierstoff gefüllt, so weist derselbe eine besonders niedrige Gasbeladung auf, wodurch der Unterdruck nach Verschließen des Zwischenraumes und Abkühlen des Isolierstoffes gegebenenfalls noch erhöht werden kann.

Wird der Körper zum Füllen in einen Rezipienten eingebracht, so kann der evakuierte Isolierstoff besonders leicht von einem Vorratsbehälter, im welchem etwa derselbe Druck herrscht wie in Rezipienten, aus eingefüllt werden.

Wird der evakuierte und mit dem Isolierstoff gefüllte Zwischenraum unter Vakuum durch Verbinden des Außen- und Innenmantels mit einem flüssigen oder pastenförmigen sich verfestigenden Material verschlossen und anschließend zusätzlich z.B. durch Kleben, Löten oder Schweißen verschlossen, so ist ein besonders einfach durchzuführendes Verfahren gegeben.

Wird zum Verbinden ein thermoplastisches Material oder eine niedrigschnelzende Legierung verwendet, so kann jegliche Gefahr, daß das Verschlußmaterial Gase abgibt,vermieden werden.

Um eine thermische Brücke zwischen Innen- und Außenkörper zu verhindern, kann nach dem Verschweißen das thermoplastische Material erneut aufgeschmolzen werden, wobei sodann das aufgeschmolzene Material z.B. durch Bewegung insbesondere Rotation des Körpers auf der Innenfläche des Außenmantels verteilt wird.

Wird der Isolierstoff im Zwischenraum nach dem Verschließen desselben gleichmäßig verteilt, dies kann beispielsweise bei einem Rohr durch Rotation um die Längsachse und Stoßbewegungen in Richtung der Längsachse erfolgen, worauf der Innenmantel durch Druckbeaufschlagung in seinem Innenraum plastisch verformt wird, so kann einerseits eine optimale thermische Isolierung aufgrund der vollkommenen Füllung des Zwischenraums erreicht werden, wobei gleichzeitig eine weitere Deformation des Innenkörpers z.B. bei Druckbeaufschlagung vermieden wird, da dieser die Kraft auf den thermischen Isolierstoff und jener diese auf den stärker auszubildenenden Außenmantel übertragen kann.

Im folgenden wird das erfindungsgemäße Verfahren anhand der Zeichnungen näher erläutert.

Es zeigen Fig. 1 eine schematische Darstellung einer Vorrichtung zur Durchführung des erfindungsgemäßen Verfahrens, wohingegen die Figuren 2 und 3 das verschlossene Ende eines isolierten Körpers in Schnitt zeigen.

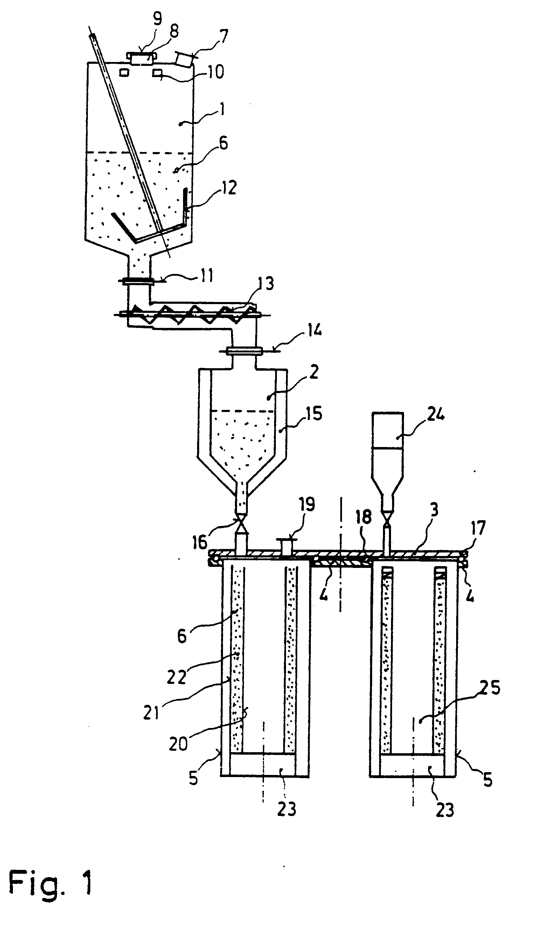

Die in Fig. 1 schematisch dargestellte Anlage weist einen Behälter 1 und einen Zwischenbehälter 2 für den teilchenförmigen Isolierstoff auf. Unterhalb des Zwischenbehälters 2 ist eine Aufnehmerplatte 3 auf welcher eine Drehplatte 4 mit Rezidienten 5 befestigt ist. In Behälter 1 wird der teilchenförmige oder pulverförmige poröse Isolierstoff 6 gelagert. Über den Stutzen 7 ist der Behälter mit einer nicht dargestellten Vakuumpumpe verbunden. Um die Einfüllöffnung 8, die mit einem Deckel 9 vakuumdicht verschließbar ist, ist ein IR-Strahler 10 angebracht. Der teilchenförmige, pulverförmige oder fasrige Isolierstoff z.B. Kieselgur, Aktivkohle, Perlit, Vermikulit, Molekularsiebe u. dgl. wird in den mit dem Schieber 11 nach unten verschlossenen Behälter 1 eingebracht. Sodann wird die Öffnung 8 durch den Deckel 9 verschlossen, worauf über den Stutzen 7 das Gas abgesaugt wird. Während des Absaugens wird durch das Rührorgan 12 der Isolierstoff umgewälzt, wobei gleichzeitig eine Hitzebeaufschlagung durch den IR-Strahler 10 erreicht wird. Ist das erwünschte Vakuum erreicht, welches über ein nicht dargestelltes Manometer überprüfbar ist, wird der Schieber 11 geöffnet und der Isolierstoff über die Förderschnecke 13 und den geöffneten Schieber 14 in den Zwischenbehälter 2 verbracht. Der Zwischenbehälter 2 weist eine thermische Isolierung 15 auf, um ein Abkühlen des Isolierstoffes zu verhindern. Der Zwischenbehälter 2 weist an seinem unteren Ende ein Verschlußorgan 16 auf, das über einen Stutzen mit der feststehenden Aufnehmerplatte 3 verbunden ist. Mit der feststehenden Aufnehmerplatte 3 ist eine Drehplatte 4 verbunden, welche vier kreisförmige Ausnehmungen 17 aufweist, in welchen jeweils die Rezipienten 5 gasdicht anordenbar sind. Die Ausnehmungen 17 sind jeweils von einer elastischen Dichtung 18 umgeben, mit welcher gegen die feststehende Aufnehmerplatte 3 abgedichtet wird. In einer ersten nicht dargestellten Position wird der Rezipient mit dem zu füllenden Körper mit metallischem Innen- und Außenmantel beschickt, worauf der Rezipient evakuiert wird. Sodann wird die Drehplatte um 90° gedreht und der Rezipient gelangt in die in Fig. 1 im linken Rezipienten dargestellte Stellung. Über den Stutzen 19 wird der Rezipient weiter evakuiert, wobei gleichzeitig in den durch den Innenmantel 20 und Außenmantel 21 gebildete Zwischenraum 22 der Isolierstoff eingefüllt wird. Während des Füllens wird der Körper, der durch ein Innen- und Außenrohr gebildet ist, die an einem Ende durch eine metallische Membran dünnerer Wandstärke als die der Rohre miteinander verbunden sind, welcher unter metallischem Kontakt auf einem geerdeten Dreh- und Rütteltisch 23 angeordnet ist, gedreht und in Füllrichtung hin und her bewegt. Der Teller des Dreh- und Rütteltisches dient gleichzeitig als Tragschale für eine elektrische Waage. Ist der Zwischenraum 22 mit der erwünschten Menge des Isolierstoffes gefüllt, was über die Gewichtszunahme des Körpers festgestellt wird, so wird die Zufuhr unterbunden, und durch Drehung der Drehplatte mit dem darauf befestigten Rezipienten gelangt ein neuer, bereits vorevakuierter Rezipient erneut in die Füllstation. Der Rezipient mit dem bereits gefüllten Körper gelangt in die in Fig. 1 dargestellte rechte Position, wobei der Körper um seine Längsachse gedreht wird und in das obere Ende des Zwischenraumes wird ein kurz über den Schmelzpunkt erhitzter thermoplastischer Kunststoff, z.B. weichmacherfreies Polyvinylchlorid, der in dem Behälter 24 gelagert ist, eingebracht. Der thermoplastische Kunststoff erstarrt, wodurch ein gasdichter Verschluß des Zwischenraumes erreicht wird. Dieser Rezipient wird sodann in eine weitere Station verdreht, in welcher entweder belüftet wird oder ein Verschweißen, z.B. durch Elektronenstrahlschweißen, da hierbei eine sehr geringe Wärmeeinbringung vorliegt, durchgeführt wird.

Ein vorläufiger Verschluß wird auch mit einem Einschweißdeckel, der hydraulisch verspannt und dadurch dichtend aufgebracht ist, erreicht. Ein Verschweißen kann dann bei Raumdruck erfolgen.

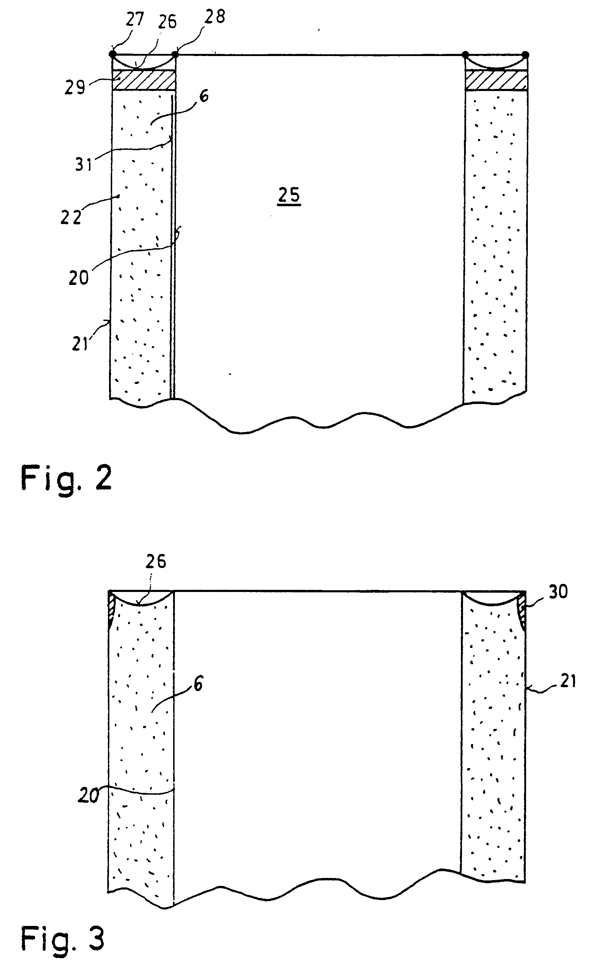

Wie aus Fig. 2 ersichtlich, kann zur Verbindung des Innenmantels 20 und des Außenmantels 21 des Körpers 25 ein sphärischer Ring z.B. eine Membran 26 verwendet werden.

Diese Membran wird durch Schweißnähte 27, 28 mit dem jeweiligen Mantel verbunden. Unterhalb der Membran ist der Verschluß 29 aus thermoplastischem Material zu sehen. Wird nun der Körper 25 erhitzt, und zwar über dem Schmelzpunkt des thermoplastischen Materials und um seine Längsachse in schnelle Rotation versetzt, so verteilt sich der thermoplastische Stoff 30 entlang der Innenfläche des Außenmantels 21 wie in Fig. 3 ersichtlich. Wird nun der teilchenförmige Isolierstoff auch in den ursprünglich durch den Verschluß eingenommenen Raum z.B. durch Rütteln verteilt, worauf der Innenmantel in Richtung zum Außenmantel durch Druckbeaufschlagung plastisch verformt wird, so kann ein thermisch isolierter Körper erreicht werden, welcher lediglich die dünne Membran 26 als untergeordnete Wärmebrücke aufweist.

Typische Beispiele für thermisch isolierte Körper, welche nach dem erfindungsgemäßen Verfahren hergestellt werden können, sind Rohre für Fernwärmeleitungen oder auch für unterkühlte Flüssigkeiten und Gase. Ein weites Anwendungsgebiet ist weiters für Wärmespeicher, insbesondere für Latentwärmespeicher gegeben, wobei die guten Isoliereigenschaften einen weiten Einsatz z.B. bei der Solarwärme erlauben. Als Material für den Innen- und Außenmantel sowie die Membran haben sich metallische Werkstoffe, insbesondere Stahl als geeignet erwiesen, wobei ein IR-Strahlungsschild entweder durch Polieren der Oberfläche der Rohre oder durch Vorsehen eines eigenen IR-Schildes, z.B. einer Aluminiumfolie 31, wie in Fig. 2 in der linken Hälfte dargestellt, geschehen kann.

## Patentansprüche

1. Verfahren zur Herstellung eines thermisch isolierten Körpers z.B. Rohres mit einem, insbesondere metallischen, Innen- (20) und, insbesondere metallischen, Außenmantel (21), wobei der durch diese gebildete Zwischenraum (22) mit einem porösen, teilchenförmigen und/oder porösen, pulverförmigen Isolierstoff (6) wie z.B. Kieselgur, Aktivkohle, Perlit, Vermikulit, Molekularsiebe u. dgl., der ein hohe Aufnahmevermögen für Gase aufweist, gefüllt, evakuiert und vakuumdicht verschlossen wird, dadurch gekennzeichnet, daß der Zwischenraum (22) evakuiert wird, bevor der Isolierstoff (6) aus einem unter Unterdruck stehenden Behälter (1) in den Zwischenraum (22) eingebracht und der Zwischenraum anschließend verschlossen wird.

2. Verfahren nach Anspruch 1, dadurch gekennzeichnet, daß der im Zwischenraum (22) befindliche Isolierstoff (6) während des Füllens mechanisch, insbesondere entgegen und in Füllrichtung, bewegt wird.

3. Verfahren nach Anspruch 1 oder 2, dadurch gekennzeichnet, daß vor dem Füllen der Innen- (20) und Außenmantel (21) elektrisch geerdet werden.

4. Verfahren nach Anspruch 1, 2 oder 3, dadurch gekennzeichnet, daß das Füllen nach Eintragen einer vorgegebenen Menge des Isolierstoffes (6) beendet wird.

5. Verfahren nach Anspruch 4, dadurch gekennzeichnet, daß die Mengenvorgabe jeweils über das Gewicht erfolgt.

6. Verfahren nach einem der Ansprüche 1 bis 5, dadurch gekennzeichnet, daß der Innen- (20) und Außenmantel (21) an einem Ende vor dem Füllen durch eine Membran (26) miteinander verbunden werden.

7. Verfahren nach einem der Ansprüche 1 bis 6, dadurch gekennzeichnet, daß der Zwischenraum (22) mit einem erwärmten bzw. erhitzten Isolierstoff (6) gefüllt wird.

8. Verfahren nach einem der Ansprüche 1 bis 7, dadurch gekennzeichnet, daß die Schüttung des Isolierstoffes (6) im Zwischenraum (22) durch Schwerkrafteinwirkung verdichtet wird.

9. Verfahren nach einem der Ansprüche 1 bis 8, dadurch gekennzeichnet, daß der Innen- (20) und Außenmantel (21) nach dem Füllen gasdicht miteinander verbunden, insbesondere verschweißt, werden.

10. Verfahren nach einem der Ansprüche 1 bis 9, dadurch gekennzeichnet, daß der Körper zum Füllen in einen Rezipienten (5) eingebracht wird.

11. Verfahren nach einem der Ansprüche 1 bis 10, dadurch gekennzeichnet, daß der Zwischenraum (22) zuerst mit einem flüssigem oder pastenförmigen, sich verfestigenden Material (29) und anschließend zusätzlich durch Kleben, Löten oder Schweißen (26, 27, 28) verschlossen wird.

12. Verfahren nach Anspruch 11, dadurch gekennzeichnet, daß zum Verschließen ein thermoplastisches Material (29) oder eine niedrig schmelzende Legierung verwendet wird.

13. Verfahren nach Anspruch 12, dadurch gekennzeichnet, daß nach dem zusätzlichen Verschließen (26, 27, 28) das thermoplastische Material (29) oder die Legierung aufgeschmolzen wird.

14. Verfahren nach Anspruch 13, dadurch gekennzeichnet, daß das aufgeschmolzene Material (30) durch Bewegung, insbesondere Rotation des Körpers (25) auf der Innenfläche des Außenmantels (21), die Membran (26) oder der Außenfläche des Innenmantels (20) verteilt wird.

15. Verfahren nach einem der Ansprüche 1 bis 14, dadurch gekennzeichnet, daß der Isolierstoff (6) im Zwischenraum (22) nach dem Verschließen gleichmäßig verteilt wird, worauf der Innenmantel (20) durch Beaufschlagung seines Innenraum mit Druckplastisch verformt wird.

## Claims

1. A method of producing a thermally insulated body, for example a pipe, with an inner jacket (20), preferably of metal, and an outer jacket (21), preferably of metal, the interspace (22) formed thereby being filled with a porous, particulate and/or porous. powdered insulating material (6), such as for example kieselguhr, activated charcoal, perlite. vermiculite, molecular sieve and the like having a high absorption capacity for gases, and being evacuated and hermetically sealed, characterized in that the interspace (22) is evacuated before the insulating material (6) is taken from a container (1) under reduced pressure into the interspace (22) and the interspace is subsequently sealed.

2. A method according to Claim 1, characterized in that during the filling the insulating material (6) present in the interspace (22) is mechanically agitated, in particular against and in the filling direction.

3. A method according to Claim 1 or 2, characterized in that before the filling the inner jacket (20) and the outer jacket (2I) are electrically earthed.

4. A method according to Claims 1, 2 or 3, characterized in that the filling is stopped· after a predetermined quantity of the insulating material (6) is recorded.

5. A method according to Claim 4, characterized in that the quantity is predetermined by way of weight in each case.

6. A method according to any one of Claims 1 to 5, characterized in that the inner jacket (20) and the outer jacket (21) are connected together at one end by a diaphragm (26) before the filling.

7. A method according to any one of Claims 1 to 7, characterized in that the interspace (22) is filled with a warmed or heated insulating material (6).

8. A method according to any one of Claims 1 to 7, characterized in that the insulating material (6) poured into the interspace (22) is compacted by the action of gravity.

9. A method according to any one of Claims 1 to 8, characterized in that the inner jacket (20) and the outer jacket (21) are connected together, and in particular welded, in a gas-tight manner after the filling.

10. A method according to any one of Claims 1 to 9, characterized in that the body is inserted in a receiving means (5) for filling.

11. A method according to any one of Claims 1 to 10, characterized in that the interspace (22) is sealed first with a liquid or pasty, self-hardening material (29) and then additionally by adhesion, soldering or welding (26, 27, 28).

12. A method according to Claim 11, characterized in that a thermoplastic material (29) or an alloy with a low melting point is used for sealing.

13. A method according to Claim 12, characterized in that the thermoplastic material (29) or the alloy is melted on after the additional sealing (26, 27, 28).

14. A method according to Claim 13, characterized in that the material (30) melted on is distributed on the inner surface of the outer jacket (21), the diaphragm (26) or the outer surface of the inner jacket (20) by moving, and in particular rotating, the body (25).

15. A method according to any one of Claims 1 to 14, characterized in that the insulating material (6) is distributed uniformly in the interspace (22) after sealing, after which the inner jacket (20) is plastically deformed by applying pressure to its inner space.

## Revendications

1. Procédé pour la fabrication d'un corps isolé thermiquement, par exemple d'un tube muni d'une chemise intérieure (20) en particulier métallique et d'une chemise extérieure (21) en particulier métallique, dans lequel on remplit l'espacement (22) formé par celles-ci d'une matière isolante poreuse (6) sous forme de particules et/ou poreuse pulvérulente comme par exemple le kieselguhr, le charbon activé, la perlite, la vermiculite, les tamis moléculaires et corps similaires, qui présente un grand pouvoir d'absorption de gaz, on y fait le vide et on le ferme de façon étanche au vide, caractérisé par le fait que l'on fait le vide dans l'espacement (22) avant d'introduire la matière isolante (6), venant d'un récipient (1) soumis à une dépression, dans l'espacement soumis à une dépression (22) et on ferme ensuite l'espacement.

2. Procédé selon la revendication 1, caractérisé par le fait que pendant le remplissage, on déplace mécaniquement la matière isolante (6) située dans l'espacement (22), en particulier contre le sens de remplissage et dans ce sens.

3. Procédé selon l'une des revendications 1 et 2, caractérisé par le fait qu'avant le remplissage, on relie électriquement à la terre les chemises intérieure (20) et extérieure (21).

4. Procédé selon l'une des revendications 1, 2 et 3, caractérisé par le fait que l'on met fin au remplissage après introduction d'une quantité prescrite de la matière isolante (6).

5. Procédé selon la revendication 4, caractérisé par le fait que la fixation de la quantité s'effectue dans chaque cas par le poids.

6. Procédé selon l'une des revendications 1 à 5, caractérisé par le fait qu'avant le remplissage, on relie entre elles les chemines intérieure (20) et extérieure (21) à une extrémité, par une membrane (26).

7. Procédé selon l'une des revendications 1 à 6, caractérisé par le fait que l'on remplit l'espacement (22) d'une matière isolante chauffée (6).

8. Procédé selon l'une des revendications 1 à 7, caractérisé par le fait que l'on tasse l'entassement de la matière isolante (6) dans l'espacement (22) par l'action de la pesanteur.

9. Procédé selon l'une des revendications 1 à 8, caractérisé par le fait qu'après le remplissage, on relie entre elles les chemises intérieure (20) et extérieure (21) de façon étanche aux gaz, en particulier qu'on les soude.

10. Procédé selon l'une des revendications 1 à 9, caractérisé par le fait qu'en vue du remplissage, on introduit le corps dans un récipient (5).

11. Procédé selon l'une des revendications 1 à 10, caractérisé par le fait que l'on ferme tout d'abord l'espacement, (22) par une matière liquide ou pâteuse se solidifiant (29) et ensuite, en outre, par collage, brasage ou soudage (26, 27, 28).

12. Procédé selon la revendication 11, caractérisé par le fait que pour la fermeture, on utilise une matière thermoplastique (29) ou un alliage à bas point de fusion.

13. Procédé selon la revendication 12, caractérisé par le fait qu'après la fermeture supplémentaire (26, 27, 28), on fond la matière thermoplastique (29) ou l'alliage.

14. Procédé selon la revendication 13, caractérisé par le fait que l'on répartit la matière fondue (30), par mouvement, en particulier par rotation du corps (25), sur la surface intérieure de la chemise extérieure (21), de la membrane (26) ou la surface extérieure de la chemise intérieure (20).

15. Procédé selon l'une des revendications 1 à 14, caractérisé par le fait que l'on répartit uniformément la matière isolante (6) dans l'espacement (22) après la fermeture, après quoi on déforme la chemise intérieure (20) par application de pression à sa cavité intérieure.

Fig. 1

Fig. 2

Fig. 3